# FASCICULE DE BREVET EUROPEEN

(11) **EP 0 826 169 B1**
(45) Date de publication et mention de la délivrance du brevet: **13.11.2002**
(21) Numéro de dépôt: 97908320.1
(22) Date de dépôt: 07.03.1997
(51) Int. Cl.: G06F 1/04, G06F 1/00

(54) **CIRCUIT INTEGRE PERFECTIONNE ET PROCEDE D'UTILISATION D'UN TEL CIRCUIT INTEGRE**
VERBESSERTE INTEGRIERTE SCHALTUNG UND VERFAHREN ZUR VERWENDUNG DIESER SCHALTUNG
IMPROVED INTEGRATED CIRCUIT AND METHOD FOR USING SAME

(30) Priorité: 07.03.1996 FR 9602903
(43) Date de publication de la demande: 04.03.1998
(73) Titulaire: CP8 Technologies, 78431 Louveciennes (FR)
(72) Inventeur: UGON, Michel, F-78130 Maurepas (FR)
(74) Mandataire: Corlu, Bernard
(86) Numéro de dépôt international: FR9700406
(87) Numéro de publication internationale: WO97033217

(56) Documents cités:
- EP-A- 0 448 262
- FR-A- 2 596 897
- US-A- 4 125 763
- US-A- 5 404 402
- IBM TECHNICAL DISCLOSURE BULLETIN, vol. 37, no. 5, 1 Mai 1994, pages 419-421, XP000453206 "ACTIVELY SLOWING A CPU IN RESPONSE TO THE DETECTION OF A SIGNATURE STRING"
- PATENT ABSTRACTS OF JAPAN vol. 016, no. 532 (P-1448), 30 Octobre 1992 & JP 04 199234 A (NAGANO OKI DENKI KK;OTHERS: 01), 20 Juillet 1992,

## Description

La présente invention concerne un circuit intégré perfectionné et le procédé d'utilisation. L'invention trouve son application notamment dans les microprocesseurs ou microcalculateurs et également dans les circuits à logiques câblées nécessitant une sécurisation.

Il est connu que les microprocesseurs ou les microcalculateurs exécutent séquentiellement des instructions successives d'un programme enregistré dans une mémoire, en synchronisme avec un ou plusieurs signaux de cadencement référencés par rapport à un des signaux d'horloge fournis au microprocesseur ou au microcalculateur soit en interne soit en externe.

Il est ainsi possible de corréler les différentes phases de cette exécution de programme avec les signaux d'horloge puisque l'exécution d'une instruction particulière se décompose elle-même en plusieurs étapes cadencées par une ou plusieurs impulsions d'horloge successives. En effet, dans les microprocesseurs de l'art antérieur, le fonctionnement est cadencé régulièrement par les signaux d'horloge provenant en général d'un circuit séquenceur qui engendre les impulsions électriques nécessaires, notamment en déphasant les signaux par rapport à l'horloge de référence. En outre le séquencement des actions doit tenir compte des temps nécessaires pour accéder aux divers registres, aux mémoires et aux organes internes, mais aussi et surtout aux temps de propagation des signaux sur les bus et à travers les divers circuits logiques. Dès lors, les instants de début et de fin de chaque instruction étant parfaitement connus, il est en principe possible de savoir quelle est l'instruction qui s'exécute à un moment donné dans l'unité de traitement du processeur puisque le programme qui se déroule est constitué d'une suite prédéterminée d'instructions.

On peut, par exemple, déterminer le nombre d'impulsions d'horloge délivrées à partir du lancement du programme, de la remise à zéro de l'unité de traitement, ou encore du temps qui s'est écoulé depuis un événement ou un signal de référence externe ou interne.

Cette possibilité de pouvoir observer le déroulement d'un programme dans un microprocesseur ou un microcalculateur est un inconvénient majeur lorsque ce microprocesseur ou microcalculateur est utilisé dans des applications de haute sécurité. En effet, un individu mal intentionné pourrait ainsi connaître les états successifs dans lesquels se trouve le processeur et tirer parti de ces informations pour connaître certains résultats internes de traitement.

On peut imaginer, par exemple, qu'une action donnée sur un signal externe puisse se produire à des instants différents en fonction du résultat d'une opération sécuritaire déterminée, tel que le test d'une information confidentielle interne ou le déchiffrement d'un message, ou encore le contrôle d'intégrité de certaines informations. Selon l'instant considéré, ce signal externe pourrait donner des renseignements sur le résultat ou sur le contenu confidentiel de l'information, et même, dans le cas de calculs cryptographiques, sur la clé secrète de chiffrement utilisée.

Par ailleurs il est connu des microprocesseurs ou microcalculateurs tels que ceux commercialisés par la Société SGS Thomson sous la référence ST16XY qui comportent un microprocesseur incorporant un générateur aléatoire dont la lecture permet d'obtenir un nombre aléatoire utilisé, par exemple pour les calculs d'encryptages ou de décryptages. Il est également connu par le document US 5 404 402 un moyen de décorrélation unique constitué par un dispositif de modulation de l'horloge par une fonction aléatoire. Ce système permet de fournir un train d'impulsion d'horloge imprévisible mais ne suggère nullement un circuit intégré comportant des moyens de décorrélation activables et activés par soit le circuit intégré, soit le programme exécuté par le circuit intégré.

C'est un des buts de l'invention que de doter le circuit de moyens interdisant le type d'investigation décrit plus haut, et plus généralement d'empêcher les observations illicites ou non du comportement interne du circuit.

Ce but est atteint par le fait que le circuit intégré perfectionné possède des moyens de décorrélation du déroulement d'au moins une séquence d'instruction d'un programme avec les signaux électriques internes ou externes du circuit selon les revendications 1 ou 21.

Selon une autre particularité les signaux électriques du circuit sont des signaux de cadencement, de synchronisation ou d'état.

Selon une autre particularité les moyens de décorrélation comprennent un ou plusieurs circuits qui engendrent une succession d'impulsions d'horloge ou de cadencement dont la répartition est aléatoire dans le temps.

Selon une autre particularité les moyens de décorrélation comprennent un générateur aléatoire permettant une désynchronisation de l'exécution de la séquence de programme dans le processeur.

Selon une autre particularité les moyens de décorrélation comprennent un circuit de calibration d'horloge qui permet d'éliminer les impulsions de cadencement trop courtes.

Selon une autre particularité les moyens de décorrelation comprennent un système de génération aléatoire d'interruption.

Selon une autre particularité les moyens de décorrélation comprennent l'exécution de séquences secondaires dont les instructions et temps d'exécution sont différentes et qui sont choisies aléatoirement.

Selon une autre particularité le temps variable du traitement secondaire dépend d'une valeur fournie par un générateur aléatoire.

Selon une autre particularité le traitement secondaire ne modifie pas le contexte général de fonctionnement du programme principal afin de permettre le retour à ce dernier sans avoir à rétablir ce contexte.

Selon une autre particularité le traitement secondaire rétablit le contexte du programme principal avant de lui redonner le contrôle du processeur.

Selon une autre particularité le programme principal peut autoriser ou inhiber un ou plusieurs moyens de décorrélation.

Selon une autre particularité il possède des moyens de déphasage des signaux de cadencement, de synchronisation ou d'état du processeur.

Selon une autre particularité les moyens de déphasage génèrent un déphasage aléatoire des signaux de cadencement, de synchronisation ou d'état du processeur.

Selon une autre particularité les moyens de déphasage aléatoires désynchronisent, de l'horloge externe, le fonctionnement du processeur partiellement ou totalement pendant l'exécution d'un programme.

Selon une autre particularité le générateur aléatoire utilise des compteurs rebouclés ou non et initialisés par une valeur aléatoire.

Selon une autre particularité la valeur d'initialisation provient d'une mémoire non volatile.

Selon une autre particularité la valeur d'initialisation est modifiée pendant l'exécution d'un programme.

Selon une autre particularité le générateur aléatoire utilise un algorithme de type cryptographique ou une fonction de hachage initialisés par la valeur d'initialisation.

Selon une autre particularité le séquencement des actions tient compte des temps nécessaires pour accéder aux divers registres, aux mémoires et aux organes internes, mais aussi et surtout des temps de propagation des signaux sur les bus et à travers les divers circuits logiques.

Un autre but de l'invention est de proposer un procédé d'utilisation du circuit intégré.

Ce but est atteint par le fait que le procédé d'utilisation d'un circuit intégré consiste :
soit à déclencher le séquencement d'une ou plusieurs instructions ou opérations à l'aide d'une horloge à impulsion aléatoire ;
soit à déclencher de façon aléatoire des séquences d'interruption ;
soit à déclencher le traitement d'une séquence aléatoire d'instruction ou d'opération au cours de l'exécution d'une séquence principale d'instruction ou d'opération ;
soit à combiner au moins deux des possibilités ci-dessus.

D'autres particularités et avantages de la présente invention apparaîtront plus clairement à la lecture de la description ci-après faite en référence aux dessins annexés dans lesquels :
la figure 1 représente le schéma de principe des circuits électroniques d'un premier mode de réalisation de l'invention ;
la figure 2 représente une deuxième variante simplifiée de réalisation de l'invention ;
la figure 3A représente le schéma de réalisation du circuit calibreur ;
la figure 3B représente les schémas de séquencement logiques du circuit calibreur ;
la figure 4A représente le schéma des circuits logiques de réalisation d'un circuit de déphasage ;
la figure 4B représente le schéma des séquences des signaux de ce circuit ;
la figure 5 représente une troisième variante de réalisation de l'invention ;
la figure 6 représente le schéma des circuits logiques de réalisation d'une horloge interne ;
la figure 7A représente le schéma logique de réalisation du générateur aléatoire ;
la figure 7B représente le schéma logique de réalisation de chaque cellule du générateur aléatoire.

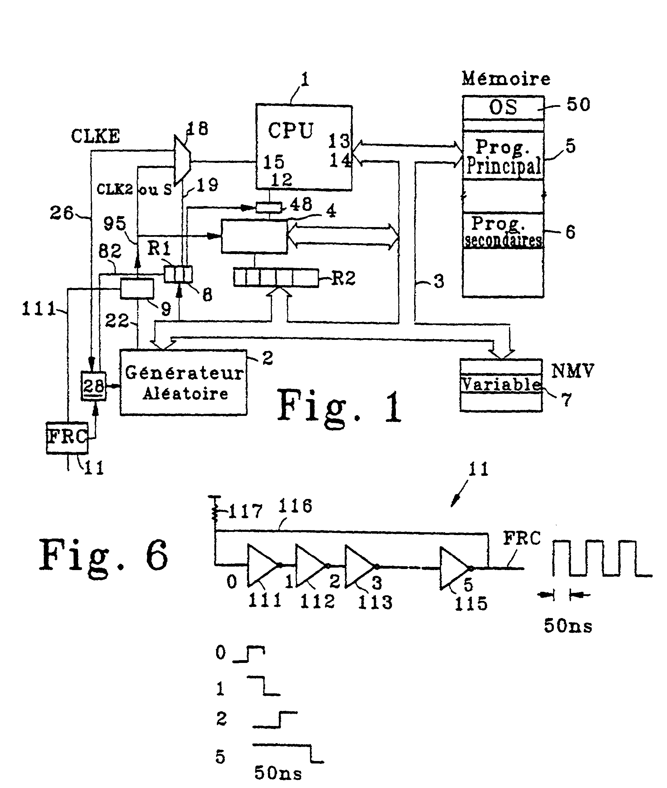

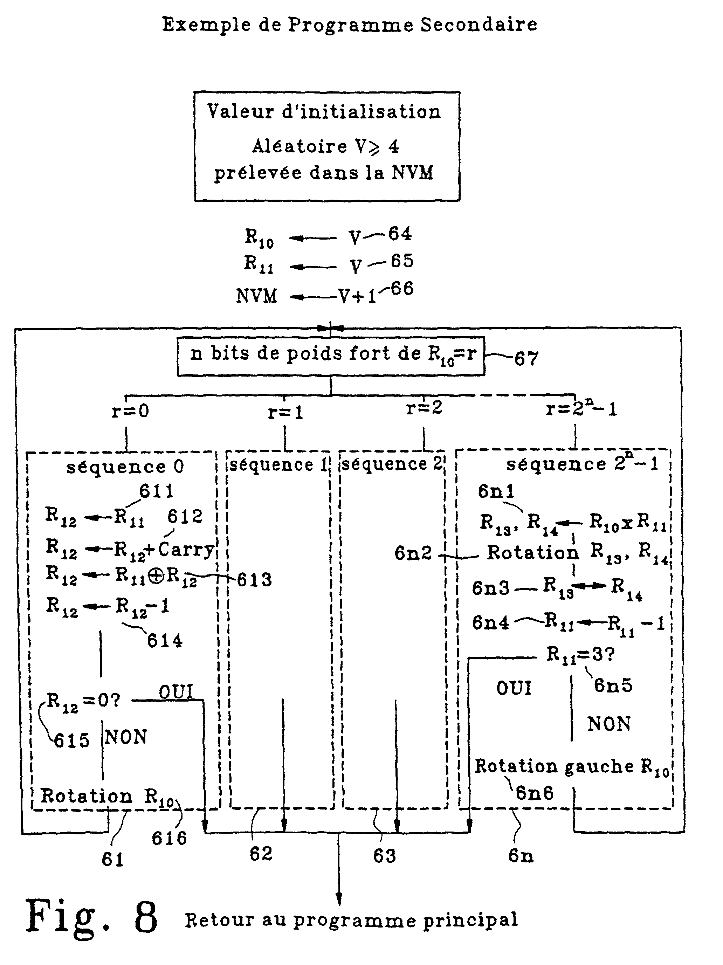

la figure 8 représente de façon schématique un exemple de séquences du programme secondaire choisies aléatoirement. Dans la description on entend par microcalculateur un circuit intégré monolithique incorporant un microprocesseur avec sa mémoire vive de type RAM associée à au moins une mémoire non volatile programmable ou non telle que, par exemple, de type RAM avec alimentation de sauvegarde, ou ROM, ou PROM, ou EPROM, ou EEPROM ou RAM du type Flash etc...ou une combinaison de ces mémoires. L'invention va maintenant être explicitée à l'aide de la figure 1 dans laquelle un CPU (1) comporte un générateur aléatoire (2) qui peut fonctionner sur une horloge interne (11). De tels processeurs sont comme on l'a déjà dit, connus notamment par la famitie de microcalculateurs ST16XY. Toutefois ces microcalculateurs ou microprocesseurs qui utilisent un registre à décalage à entrées-sorties parallèles rebouclé sur au moins une de ses entrées et dont le décalage est cadencé par une horloge interne pour constituer le générateur aléatoire, se servent de l'horloge externe de séquencement des cycles machines du microprocesseur, pour exécuter l'instruction de lecture du contenu du registre. L'invention permet de générer un nombre aléatoire et non pas pseudo aléatoire en se basant sur le fait que l'horloge interne du générateur aléatoire, qui a une fréquence multiple de l'horloge externe, est déphasée aléatoirement par rapport à celle-ci.

L'invention consiste à utiliser le principe d'un tel microprocesseur à générateur aléatoire en lui adjoignant un certain nombre d'éléments qui vont permettre au microprocesseur exécutant le programme principal de passer d'un fonctionnement parfaitement en phase et corrélé à l'horloge externe de séquencement à un fonctionnement décorrélé, dans lequel au choix et selon le mode de réalisation sélectionné le temps d'exécution d'une instruction déterminée ne sera plus identique, même lorsque la même instruction est exécutée plusieurs fois, ou bien dans lequel la durée d'exécution d'une séquence d'instruction sera variable même si la même séquence est exécutée à plusieurs reprises par le programme principal, ou bien dans lequel la durée d'exécution d'une séquence d'instruction sera variable, le temps d'exécution d'une même instruction étant variable lui même. Ceci est obtenu par le circuit de la figure 1 dans lequel en plus du générateur aléatoire (2) l'horloge interne (11) est réalisée par un oscillateur libre à fréquence constante désynchronisée et déphasée par rapport à l'horloge externe CLKE du microprocesseur ou microcalculateur. Dans l'art antérieur l'homme de métier n'envisageait pas de cadencer le fonctionnement d'un microcalculateur ou d'un microprocesseur avec une horloge irrégulière. Au contraire tout était fait pour que le fonctionnement soit cadencé régulièrement par les signaux d'horloge provenant en général d'un circuit séquenceur qui engendre les impulsions électriques nécessaires, notamment en déphasant les signaux par rapport à l'horloge de référence. Ceci était dû notamment au fait que le séquencement des actions doit tenir compte des temps nécessaires pour accéder aux divers registres, aux mémoires et aux organes internes, mais aussi et surtout des temps de propagation des signaux sur les bus et à travers les divers circuits logiques. Dans l'invention le générateur aléatoire (2) est utilisé soit pour fournir une valeur aléatoire aux divers organes par l'intermédiaire du bus de donnée (3) et la charger dans les différents éléments que nous décrirons ci-après, soit pour générer un signal impulsionnel de périodicité variable sur sa sortie (22). Dans un microprocesseur ou microcalculateur de l'invention les signaux nécessaires au chargement et à l'exécution des instructions peuvent donc être engendrés à partir d'impulsion d'horloge réparties de façon aléatoire, mais ces impulsions doivent respecter un temps de cycle minimal afin que le processeur (1) ait un délai suffisant pour l'exécution de diverses opérations. Ce signal pour servir d'horloge au microprocesseur (1) doit être envoyé sur un circuit calibreur (9). La sortie (95) de ce circuit calibreur est envoyée sur un circuit de multiplexage (18) dont l'entrée (19) de commande du multiplexage reçoit le signal d'un ou plusieurs bits d'un registre (8) qui peut être chargé soit par le générateur aléatoire (2), soit par une valeur déterminée par le programme principal (5). Lorsque ce registre (8) est chargé avec une valeur aléatoire, la décision de sélection du signal d'horloge envoyée sur le processeur est faite aléatoirement tandis que lorsque ce registre (8) est chargé par une valeur déterminée par le programme principal c'est le programme principal qui va choisir si l'horloge de séquencement du microprocesseur sera l'horloge externe CLKE ou une horloge de décorrélation CLK2. De même un ou plusieurs bits du registre (8) sont envoyés par la liaison (82) à un circuit logique (28) qui permet en fonction du ou des bits du registre (8), de valider ou non la transmission du signal d'horloge interne (11) au générateur aléatoire (2). Ce générateur aléatoire peut donc fonctionner également sur l'horloge externe CLKE en recevant son signal par la liaison (26) et le circuit logique (28). Dans ce dernier cas les valeurs générées seront des valeurs pseudo aléatoires. Le générateur aléatoire (2) peut fonctionner en utilisant l'horloge interne (11) validée à travers le circuit (28) par le ou les bits du registre (8) et dans ce cas les valeurs générées seront des valeurs aléatoires. Le signal 1 généré en sortie (22) du générateur aléatoire (2) et reçu par le circuit calibreur (9) correspond à un signal impulsionnel dont la périodicité varie soit aléatoirement soit de façon pseudo aléatoire. Le fait que cette périodicité varie de façon pseudo aléatoire est peu gênant car, comme on le verra par la suite, le circuit de calibration (9) fait intervenir un signal d'horloge interne (FRC) qui lui-même va réintroduire une décorrélation, par une fréquence différente et un déphasage par rapport au signal d'horloge externe CLKE et par conséquent par rapport au signal d'horloge pseudo aléatoire synchronisé sur ce signal d'horloge externe.

Le dispositif peut comprendre également un registre R2 qui est chargé, soit par le générateur aléatoire (2) à l'aide d'un nombre aléatoire, soit par le programme principal (5) avec une valeur déterminée par le programme. Ce registre R2 est utilisé en totalité ou en partie par un circuit logique (4) de déclenchement d'une interruption qui reçoit sur une de ses entrées le signal d'horloge décorrélé CLK2 provenant de la sortie (95) du circuit calibreur (9). La sortie du circuit (4) est envoyée à travers une porte (48) commandée par un ou plusieurs bits du registre (8) sur l'entrée (12) d'interruption du CPU. Le ou les bits de ce registre (8) jouent le rôle de commande de masquage de l'interruption que l'on trouve de façon classique sur certains microprocesseurs. Lorsqu'une interruption est présentée sur l'entrée (12) d'interruption du processeur, le programme de traitement de l'interruption contenu, par exemple, dans le système d'exploitation ou dans le programme secondaire va introduire un temps de traitement différent pour la séquence interrompue du programme principal. Il faut bien comprendre qu'il existe deux phases dans le mode de fonctionnement par interruption.

Une première phase, dans laquelle le microprocesseur commandé par le programme dit principal autorise le fonctionnement décorrélé en démasquant, par exemple, les interruptions.

Une deuxième phase, dans laquelle l'interruption déroute automatiquement le fonctionnement sur le programme secondaire. Cette opération peut très bien se faire sans intervention du programme principal.

Enfin le dispositif de l'invention peut comprendre également un programme secondaire (6) qui peut, comme on le verra par la suite, générer un temps de durée variable qui varie à chaque fois que ce programme secondaire (6) est appelé par le programme principal (5). Ainsi la variante de réalisation représentée à la figure 1 permet au programme principal (5) de faire évoluer les degrés de protection souhaités, soit en déclenchant le séquencement d'exécution d'une ou plusieurs instructions à l'aide de l'horloge décorrélée CLK2, soit en décidant, au cours de l'exécution d'une séquence d'instruction, d'introduire ou non une gestion d'interruption déclenchée aléatoirement, soit encore en décidant ou non, au cours de l'exécution de la séquence, d'introduire un saut vers le programme secondaire (6) qui génère également un traitement de temps variable ou encore, en combinant ces différentes possibilités. Ainsi ce programme secondaire (6) peut, dans une variante de l'invention, être constitué, comme représenté à la figure 8, par une pluralité de séquences (61, 62, 63...6n) qui seront appelées de façon aléatoire et chaque séquence (0, 1, 2 ou 2ⁿ⁻¹) mettra en oeuvre un ensemble d'instructions différentes qui entraîneront un temps de traitement variable dans chaque branche et des comportements différents du microprocesseur. Les séquences pourront être appelées de façon aléatoire, par exemple, après que le programme principal a effectué le saut au programme secondaire, ce dernier charge aux étapes (64 et 65, Fig. 8) une valeur aléatoire V provenant de la mémoire (7) dans deux registres, par exemple, R10 et R11 du microprocesseur (1). Le programme secondaire incrémente cette valeur V, puis le programme commande la mémorisation de cette valeur incrémentée (V + 1) dans la mémoire NVM non volatile (7) à l'étape 66. Cette valeur mémorisée dans la mémoire non volatile (7) est destinée à une utilisation ultérieure. Le programme secondaire à l'étape 67, prélève ensuite n bits de poids forts ou faibles dans R10 afin d'obtenir une valeur r qui permettra de désigner la séquence de programme à exécuter parmi les séquences (61, 62, 63,....., 6n) de programme secondaire (6). Chaque séquence de programme secondaire produira un traitement différent, par exemple, la séquence (0) consiste d'abord à l'étape 611 à transférer le contenu du registre R11 du microprocesseur dans un registre R12. A l'étape 612 le contenu de R12 est additionné avec la valeur de retenue (CARRY), puis à l'étape 613 un OU exclusif est effectué entre le contenu du registre R11 et le contenu du registre R12 et le résultat est placé dans le registre R12. A l'étape 614 le processeur décrémente R12. A l'étape 615 un test est effectué sur la valeur de R12 pour déterminer si R12 est égal à zéro. Dans le cas où R12 = 0, le processeur retourne à l'exécution du programme principal. Dans le cas contraire, le programme secondaire (61) se poursuit par l'étape 616 qui effectue une rotation du contenu du registre R10. L'étape suivante consiste à extraire n bits de poids déterminé du registre R10, pour ensuite accéder à l'une des séquences déterminées par cette valeur r dans le programme secondaire. On pourra ainsi accéder par exemple à la séquence (2ⁿ⁻¹)qui consiste à l'étape (6n1) à transférer le résultat de la multiplication des valeurs de R10 et de R11 dans R13 et R14. A l'étape (6n2) cette séquence effectue une rotation de R13 et R14, puis à l'étape (6n3) le contenu de R13 est transféré dans R11. A l'étape (6n4) R11 est décrémenté pour ensuite, à l'étape (6n5) effectuer un test sur la valeur R11. Ce test consiste à déterminer si le contenu de R11 = 3. Dans l'affirmative on retourne au programme principal et dans la négative le programme se poursuit à l'étape (6n6) par une rotation à gauche de R10, puis par l'exécution de l'instruction (67) pour accéder à une nouvelle séquence de programme secondaire.

Dans le cas où est envisagée une combinaison du programme secondaire avec une horloge décorrélée ou des gestions d'interruption, il est possible dans une telle combinaison de se contenter d'un programme secondaire produisant un traitement plus simple. Un tel programme secondaire simplifié peut être constitué des instructions ci-après :
- MOV B, R2: qui consiste à charger le registre R2 dans le registre B microprocesseur
- LOOP DCX B: qui consiste à décrémenter le registre B de la valeur A
- JNZ B LOOP: qui consiste à faire un test sur la valeur du registre B et à reboucler sur l'étiquette LOOP dans le cas où cette valeur est différente de zéro.

Cette séquence se termine par une instruction de retour à l'instruction du programme principal qui était immédiatement après la dernière instruction exécutée avant le saut au programme secondaire (6). Le registre R2 est préalablement chargé par une instruction du programme principal (5) avant le saut au programme secondaire (6) avec une valeur aléatoire fournie par le générateur aléatoire (2). Ainsi l'exécution du programme secondaire ci-dessus défini générera toujours une durée variable.

Un autre mode de réalisation d'un programme secondaire de durée variable peut consister à définir une zone de la mémoire programme correspondant au programme secondaire (6) dans laquelle une série d'instructions est mémorisée. De préférence on choisit des instructions nécessitant des nombres de cycles machines différents pour s'exécuter, comme cela est connu par exemple, avec les instructions J, CALL, RET, RST, PCHL, INX, par rapport à des instructions nécessitant un nombre de cycles machines plus courts comme ADC, SUB, ANA, MOV etc... Dans cette zone mémoire, on dispose donc d'un certain nombre d'instructions ayant les unes par rapport aux autres des durées d'exécution différentes en nombre de cycles machines. Le programme principal (5) comporte une instruction de saut à une adresse indexée dont l'index correspond au contenu du registre R2 et l'adresse à la première adresse de la zone (6). L'exécution de cette instruction du programme principal (5) fait donc adresser par le processeur (1) de façon aléatoire des instructions dont les durées d'exécution seront différentes selon la position adressée. De façon connue le générateur aléatoire (2) sera initialisé au départ par une variable. Cette variable initiale est contenue dans une mémoire non volatile (7) et constituée, par exemple, par la dernière valeur aléatoire générée par le générateur (2) avant l'arrêt du microprocesseur (1). Ainsi le microprocesseur piloté par un programme qu'il va exécuter, va pouvoir par l'intermédiaire de ce programme déclencher les moyens de décorrélation du séquencement de l'exécution des instructions de ce programme par chargement, par exemple, des registres R2 ou 8 ou par appel des programmes secondaires.

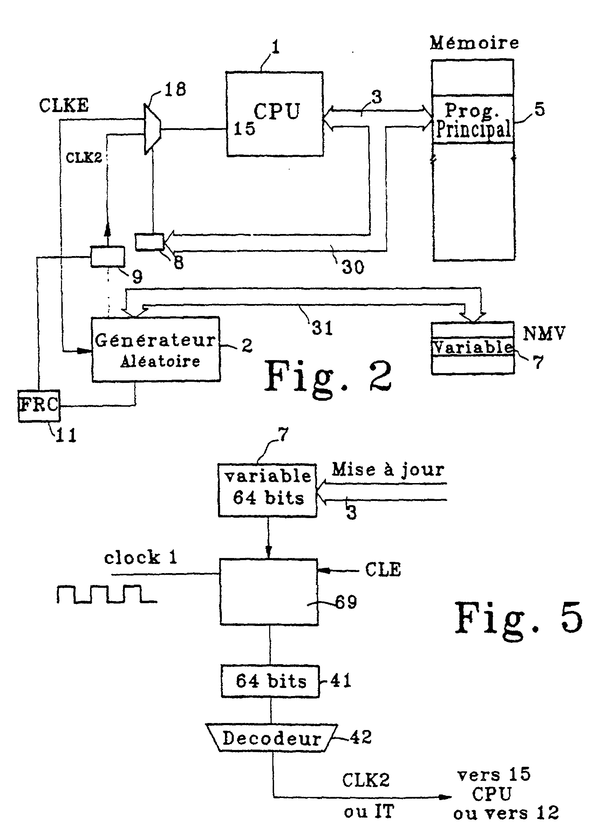

La figure 2 représente une autre variante de réalisation simplifiée de l'invention dans laquelle le contenu du registre (8) va commander le multiplexeur (18) pour décider si l'horloge externe CLKE est envoyée sur le processeur (1) ou bien, si simplement, l'horloge décorrélée CLK2 est utilisée par le CPU (1). Ce registre (8) est chargé par le bus (30) sur exécution d'une instruction du programme principal (5) qui aura été conçu pour décider à un moment donné de déclencher le mode sécuritaire en générant des séquences d'exécutions d'instructions de durée variable. Le générateur aléatoire (2) est en communication par un bus (31) avec la mémoire non volatile (7) qui permet, par exemple, la mémorisation de la dernière valeur générée pour que, tors d'une nouvelle connexion du circuit monolithique le générateur aléatoire soit réinitialisé avec une valeur différente de la précédente valeur initiale. Ce bus (31) est éventuellement contrôlé par le processeur (1). Dans une autre variante l'inscription dans la mémoire (7) peut être contrôlée par une logique câblée.

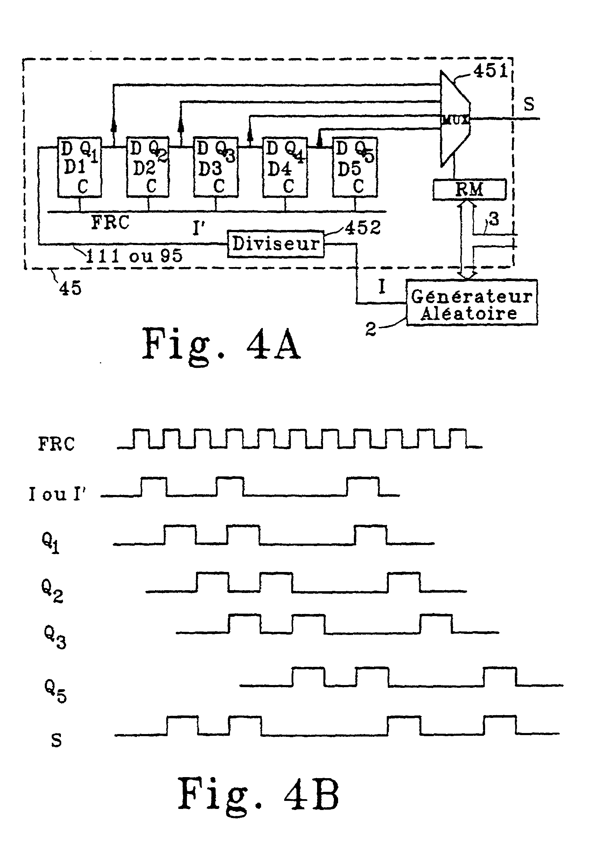

Dans un autre mode de réalisation, il est possible d'introduire un circuit (45) de déphasage variable à la sortie du circuit d'horloge comme le montre la figure 4A, ce circuit de déphasage étant par exemple constitué par un registre à décalage D1 à D5 cadencé par le signal FRC provenant du circuit (11) ou FRC recalibré fourni par la sortie (95) du circuit (9), et déphasant le signal 1, fourni par la sortie (22), qui peut être divisé par un facteur de ralentissement dans un diviseur (452). La sortie du circuit de déphasage (45) peut être réalisée à l'aide d'un multiplexeur (451) MUX qui permet de prélever l'un quelconque des signaux de sortie Q1, Q2, .... Q5, du registre à décalage en fonction du contenu du registre RM qui est chargé soit directement par le générateur aléatoire (2) soit indirectement par le programme principal (5) ou même par le programme secondaire (6) à travers le bus (3). Dans ce cas, les fronts d'horloge S délivrés en sortie peuvent être retardés ou avancés, par rapport à une impulsion médiane fournie par l'étage central du registre à décalage, d'une valeur qui dépend d'un nombre aléatoire, retardant ou avançant d'autant le séquencement d'exécution des instructions du programme en cours.

Dans un autre mode de réalisation, le générateur aléatoire et le circuit de déphasage peuvent être mis en oeuvre en permanence pendant certaines périodes particulièrement sensibles, pendant ces phases, le processeur est cadencé de façon complètement aléatoire puisque les intervalles de temps qui séparent chaque impulsion d'horloge sont variables et non pas constants comme c'est le cas dans les processeurs classiques.

L'organisation des programmes exécutés par le processeur peut être réalisée de telle manière que le fonctionnement du processeur (1) soit piloté par un véritable système d'exploitation sécuritaire qui décide du type de brouillage à mettre en oeuvre en fonction du type de programme exécuté par la machine. Dans ce cas c'est le système d'exploitation qui gère comme bon lui semble les divers signaux provenant du générateur aléatoire, du calibreur, des interruptions ou des commandes du circuit de déphasage et du lancement des programmes principal et secondaire. Il est clair que le programme secondaire peut être utilisé pour réaliser d'autres fonctions qu'une simple temporisation, notamment en effectuant des traitements qui peuvent être utiles au programme principal de façon à tirer parti du temps dédié au programme secondaire, ces traitements pouvant être constitués, par exemple, par des préparations de calculs utilisés ultérieurement par le programme principal. Bien entendu, on peut facilement généraliser les mécanismes de l'invention lorsque le processeur fonctionne en multiprogrammation, les programmes d'application pouvant alors être considérés comme autant de programmes principaux. Le générateur aléatoire et le circuit de déphasage d'horloge vus plus haut ne posent pas de problèmes particuliers de réalisation et sont connus de l'homme de l'art lorsqu'ils sont utilisés séparément pour d'autres usages n'ayant aucun lien avec l'invention.

On peut aussi réaliser un cinquième mode de réalisation simplifié de l'invention qui n'utilise pas d'interruption. Lorsque le programme principal veut se protéger, il déclenche lui-même un programme secondaire qui engendre un traitement de longueur aléatoire à des instants choisis par lui, soit au début, soit en cours de traitement de façon à brouiller les différentes séquences.

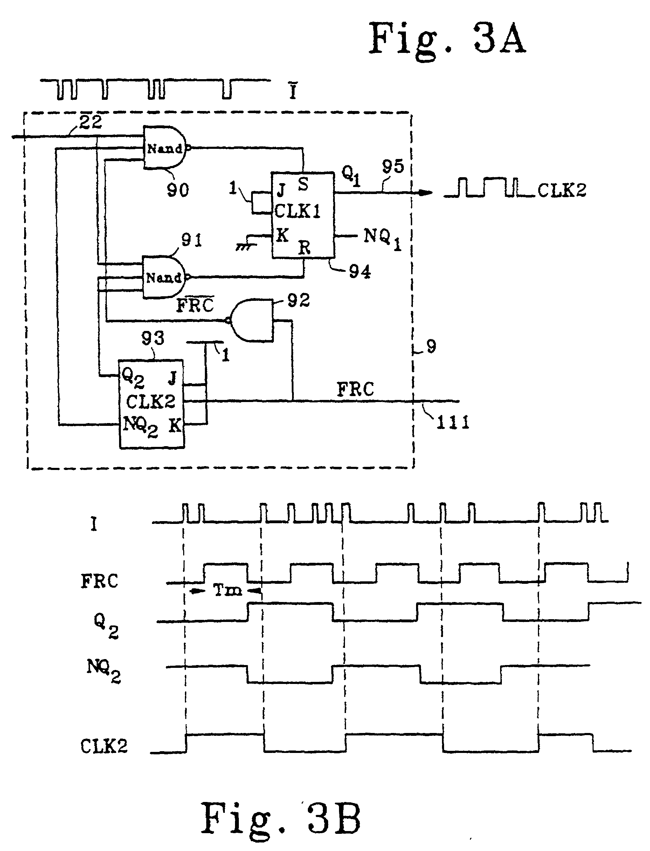

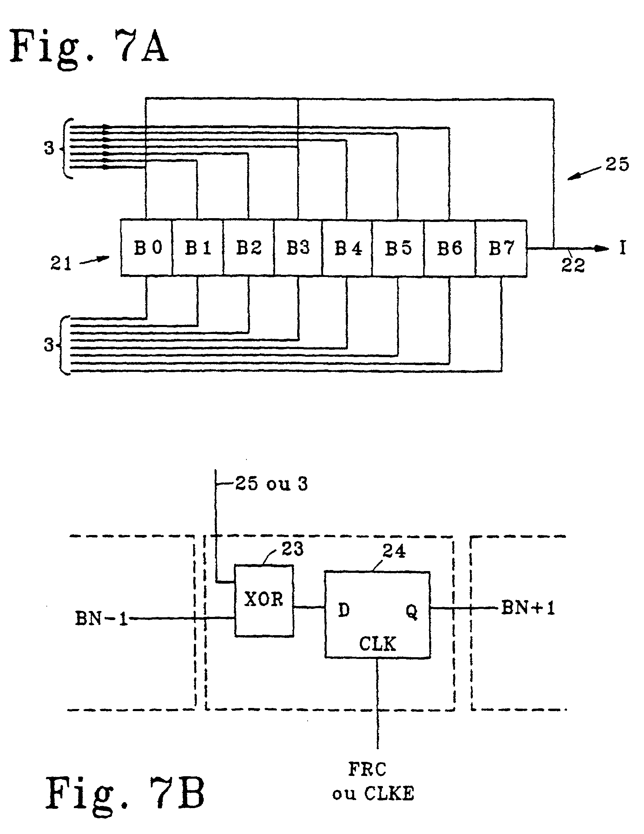

Les différents circuits permettant la réalisation de l'invention vont être maintenant explicités en liaison avec les autres figures. Ainsi un générateur aléatoire représenté sur les figures 7A et 7B est constitué, par exemple, d'un ensemble de cellules (BO à B7) formées chacune d'une porte OU exclusif (23) à deux entrées reliés à une bascule (24) de type D dont la sortie (Q) est reliée à une des deux entrées de la porte OU exclusif de la cellule suivante. La deuxième entrée de la porte OU exclusif reçoit le signal d'entrée des données provenant du bus (3) pour permettre le chargement d'initialisation ou pour les cellules (B et (B3), par exemple, un signal de rebouclage (25) provenant de la dernière cellule (B7). La sortie (22) de la dernière cellule (B7) constitue également la sortie qui délivre le signal impulsionnel (I) à périodicité aléatoirement variable. Ce signal (I) est ensuite utilisé dans le circuit calibreur (9) représenté à la figure 3A. La figure 3B représente le séquencement des signaux d'entrée et de sortie de ce circuit calibreur (9) de la figure 3A. Ce circuit calibreur est constitué de deux portes (90, 91) NON ET à trois entrées, recevant chacune sur une entrée le signal I provenant de la sortie (22) du générateur aléatoire (2). Une première porte NON ET (91) reçoit la sortie (Q2) d'une bascule (93) de type JK tandis que l'autre porte (90) reçoit la sortie inversée (NQ2) de cette bascule (93). Cette bascule (93) reçoit sur son entrée d'horloge un signal d'horloge FRC qui constitue une horloge interne au circuit. Cette horloge interne est générée par exemple par un circuit représenté à la figure 6. Les entrées J et K de cette bascule (93) sont reliées à la tension d'alimentation représentative du niveau logique "1". Le signal d'horloge interne FRC est envoyé par un circuit inverseur (92) sur chacune des troisièmes entrées des porte NON ET (90, 91). La sortie de la première porte NON ET (90) est envoyée sur l'entrée de mise à "1" de la deuxième bascule logique (94) alors que la sortie de la deuxième porte NON ET (91) est envoyée sur l'entrée de remise à zéro de la deuxième bascule (94). Cette deuxième bascule (94) a son entrée d'horloge et son entrée (J) reliées à la tension d'alimentation représentative du niveau "1" et l'entrée (K) reliée à la tension d'alimentation représentation du niveau zéro. La sortie (Q1) de cette deuxième bascule (94) délivre le signal CLK2 fourni par la liaison (95) au multiplexeur (18). L'horloge interne FRC délivre sur la liaison (111) des signaux impulsionnels périodiques ayant une largeur d'impulsion minimale Tm qui est définie par le circuit de la figure 6. Ce circuit (11) est constitué par exemple par une série d'inverseurs (111 à 115), en l'occurrence cinq, qui ont chacun un temps de propagation déterminé, par exemple de 10 nanosecondes, ce qui permet d'obtenir sur la sortie FRC une impulsion de 50 nanosecondes. Cette sortie FRC est rebouclée par la liaison (116) sur l'entrée du premier inverseur (111) et, l'entrée du premier inverseur (111) est également alimentée à travers une résistance (117) par la tension d'alimentation de 5 volts. La largeur d'impulsion est choisie à 50 nanosecondes mais il est bien évident qu'en faisant varier le nombre de portes inverseuses on fait varier la valeur Tₘ. Cette valeur Tₘ va être utilisée, comme représenté à la figure 3B, par le circuit logique (9) de la figure 3A pour générer à partir du signal impulsionnel de périodicité aléatoirement variable (I) un signal impulsionnel CLK2 dont les impulsions de largeur variable ont une valeur minimale Tₘ et dont la périodicité est également variable et désynchronisée par rapport à l'horloge externe CLKE. En effet l'horloge interne se mettant à fonctionner, dès la mise sous tension du circuit intégré, si la périodicité initiale de cette horloge est différente de la périodicité de l'horloge externe, il n'y a aucune chance pour qu'au démarrage les horloges soient synchronisées. Les signaux de ce calibreur (9) possèdent une période au moins égale à deux fois le temps minimal Tₘ nécessaire au processeur pour exécuter un cycle interne. Tous les fronts du signal CLK2 seront distants d'au moins la valeur Tm mais leur position et leur durée exacte seront aléatoires.

On voit ainsi quel que soit la variante de réalisation que le déroulement du programme principal est réalisé selon un séquencement imprévisible qui dépend selon la variante soit du générateur aléatoire, soit de l'horloge aléatoire, soit du programme secondaire, soit des interruptions aléatoires, soit d'une combinaison d'au moins deux dispositifs. Lorsque le programme principal exécute des fonctions non sensibles sur le plan sécuritaire, il peut ainsi recourir à l'horloge externe CLKE, par exemple pour délivrer des résultats au monde extérieur ou encore masquer l'interruption de décorrélation de façon à optimiser le temps de traitement. Dès qu'une fonction sécuritaire est mise en oeuvre, le programme principal (5) autorise le fonctionnement en mode aléatoire, soit en validant l'horloge aléatoire, soit l'interruption de décorrélation (ou les deux) afin de "brouiller" les divers signaux de fonctionnement, notamment en désynchronisant l'horloge par rapport au programme principal, soit encore en faisant appel au programme secondaire.

Pour le générateur aléatoire (2), on peut, par exemple, utiliser des compteurs rebouclés ayant des périodes différentes, ces compteurs étant initialisés par une "graine" (information) stockée en mémoire non volatile (7). Lorsque le processeur démarre, les compteurs prennent en compte la valeur stockée comme valeur de départ. En cours de calcul, ou à la fin du calcul, la mémoire non volatile (7) est mise à jour avec une nouvelle valeur qui va servir de graine pour initialiser les compteurs à la prochaine initialisation. Le circuit (4) de génération des interruptions peut être conçu de façon que la génération des impulsions d'interruption vues plus haut puisse, par exemple, se produire lorsque le nombre généré possède certaines caractéristiques telles que l'égalité avec certaines données du programme. Ce circuit (4) peut aussi prendre la valeur d'un ou plusieurs bits d'un ou plusieurs compteurs. Il est également possible de réaliser un très bon générateur aléatoire en utilisant un algorithme cryptographique (69) comme le montre la figure 5 ou une fonction de hachage initialisée par la "graine" (information) vue plus haut. Dans ce cas, le générateur peut être sous la forme d'un programme mettant en oeuvre l'algorithme exécuté par le processeur (1) et mettant en oeuvre par exemple, l'algorithme cryptographique en recevant d'une part une variable stockée dans la mémoire non volatile (7), d'autre part une clé pour générer un résultat stocké dans un registre tampon (41). Ce résultat stocké dans le registre tampon est ensuite traité par un dispositif décodeur (42) logiciel ou matériel pour générer soit le signal d'horloge décorrélée CLK2, soit un signal d'interruption pour le processeur (1). On voit facilement que ce générateur de nombre aléatoire peut être également utilisé pour engendrer les divers nombres aléatoires vus plus haut. Une autre manière de réaliser un tel générateur est d'amplifier la tension engendrée aux bornes d'une diode dite "de bruit" et de mettre en forme les signaux après un filtrage passe bas pour éviter que les impulsions de bruit trop rapide ne perturbent le fonctionnement.

Pour le circuit de déphasage d'horloge, il existe d'autres possibilités que celle vue plus haut. Par exemple un registre à décalage piloté par une horloge 10 fois plus élevée que celle du processeur. Si l'on suppose que le registre comporte dix bascules, on dispose de dix impulsions ayant des phases différentes qui peuvent être choisies par le processeur à l'aide d'un multiplexeur à dix entrées et une sortie. La sortie du multiplexeur étant utilisée comme précédemment pour donner le signal d'horloge interne du processeur.

Un autre mode de réalisation consiste à utiliser un circuit du même type que le générateur aléatoire vu plus haut et de prélever des impulsions sur les différents étages des compteurs. Dans ce cas, le processeur est vraiment cadencé par des impulsions réparties aléatoirement dans le temps.

Un autre mode de réalisation consiste à utiliser les signaux du générateur aléatoire pour prélever les impulsions du registre à décalage. De très nombreuses combinaisons sont possibles pour sophistiquer les mécanismes, mais les principes de l'invention restent toujours valables.

La variante de réalisation de la figure 1 est la plus complète, bien évidemment le circuit monolithique de type microprocesseur ou de type microcalculateur pourra incorporer seulement un ou plusieurs ou une combinaison quelconque des éléments représentés.

Ainsi selon une variante, le circuit monolithique peut incorporer un microprocesseur, le générateur aléatoire, l'horloge interne (FRC) et le circuit calibreur formant l'horloge décorrélée.

Dans une autre variante le circuit monolithique peut incorporer le microprocesseur, le générateur aléatoire, le circuit de génération d'interruption.

Dans une autre variante le circuit monolithique peut incorporer le microprocesseur, le programme secondaire et les circuits d'horloge décorrélée et calibrée..

Dans une autre variante le circuit monolithique peut incorporer un microprocesseur, le circuit d'horloge décorrélée et calibrée et le circuit d'interruption.

Dans d'autres variantes du circuit monolithique le microprocesseur est remplacé par un microcalculateur.

Dans d'autres variantes du circuit intégré monolithique le microprocesseur peut être remplacé par une logique combinatoire permettant d'exécuter un nombre d'instructions limitées pour des applications spécifiques. II est bien évident que dans un tel cas les mêmes mécanismes de sécurisation peuvent être appliqués au circuit intégré.

D'autres modifications à la portée de l'homme de métier dans le cadre défini par la portée des revendications font également partie de l'invention.

## Revendications

1. Circuit intégré perfectionné **caractérisé en ce qu'**il possède au moins deux moyens activables de décorrélation (6, 2, 9, 18, 40) du déroulement d'au moins une séquence d'instruction d'un programme (5) avec les signaux électriques internes ou externes du circuit intégré (1), lesdits moyens de décorrélation étant activés sélectivement par le circuit intégré.

2. Circuit intégré selon la revendication 1, **caractérisé en ce que** les signaux électriques du circuit intégré (1) sont des signaux de cadencement, de synchronisation ou d'état du microprocesseur ou du microcalculateur (1).

3. Circuit intégré selon l'une des revendications précédentes, **caractérisé en ce que** un des moyens de décorrélation comprend un ou plusieurs circuits (18, 9, 8, 28, 11, 2) qui engendrent une succession d'impulsions d'horloge ou de cadencement dont la répartition est aléatoire dans le temps.

4. Circuit intégré selon une des revendications 1 à 3, **caractérisé en ce que** un des moyens de décorrélation comprend un générateur aléatoire (2) permettant une désynchronisation de l'exécution de la séquence de programme (5) dans le microprocesseur ou microcalculateur (1).

5. Circuit intégré selon l'une des revendications précédentes, **caractérisé en ce que** un des moyens de décorrélation comprend un circuit (9) de calibration d'horloge qui permet d'éliminer les impulsions de cadencement trop courtes.

6. Circuit intégré selon l'une des revendications précédentes, **caractérisé en ce que** un des moyens de décorrélation comprennd un système de génération aléatoire d'interruption (40, 48).

7. Circuit intégré selon l'une des revendications précédentes, **caractérisé en ce que** un des moyens de décorrélation comprend l'exécution de séquences secondaires (6) dont les instructions et temps d'exécution sont différentes et qui sont choisies aléatoirement.

8. Circuit intégré selon la revendication 7, **caractérisé en ce que** le temps variable du traitement secondaire dépend d'une valeur fournie par un générateur aléatoire (2).

9. Circuit intégré selon l'une des revendications 7 à 8, **caractérisé en ce que** le traitement secondaire (6) ne modifie pas le contexte général de fonctionnement du programme principal (5) afin de permettre le retour à ce dernier sans avoir à rétablir ce contexte.

10. Circuit intégré selon l'une des revendications 7 à 9, **caractérisé en ce que** le traitement secondaire (6) rétabli le contexte du programme principal (5) avant de lui redonner le contrôle du processeur.

11. Circuit intégré selon l'une des revendications précédentes, **caractérisé en ce que** le programme principal (5) peut autoriser ou inhiber (8, R2, 48) un ou plusieurs moyens de décorrélation.

12. Circuit intégré selon l'une des revendications précédentes, **caractérisé en ce qu'**il possède des moyens (45) de déphasage des signaux de cadencement, de synchronisation ou d'état du processeur.

13. Circuit intégré selon la revendication 12, **caractérisé en ce que** les moyens de déphasage génèrent un déphasage aléatoire des signaux de cadencement, de synchronisation ou d'état du processeur.

14. Circuit intégré selon la revendication 13, **caractérisé en ce que** les moyens de déphasage aléatoires désynchronisent, de l'horloge externe, le fonctionnement du processeur (1) partiellement ou totalement pendant l'exécution d'un programme.

15. Circuit intégré selon l'une des revendications précédentes, **caractérisé en ce que** le générateur aléatoire (2) utilise des compteurs rebouclés (B0 à B7) ou non et initialisés par une valeur aléatoire (7).

16. Circuit intégré selon la revendication 15, **caractérisé en ce que** la valeur d'initialisation provient d'une mémoire non volatile (7).

17. Circuit intégré selon la revendication 16, **caractérisé en ce que** la valeur d'initialisation est modifiée pendant l'exécution d'un programme.

18. Circuit intégré selon l'une des revendications précédentes, **caractérisé en ce que** le générateur aléatoire utilise un algorithme de type cryptographique ou une fonction de hachage initialisés par la valeur d'initialisation.

19. Circuit intégré selon l'une des revendications précédentes, **caractérisé en ce que** le séquencement des actions tient compte des temps nécessaires pour accéder aux divers registres, aux mémoires et aux organes internes, mais aussi et surtout des temps de propagation des signaux sur les bus et à travers les divers circuits logiques.

20. Procédé d'utilisation d'un circuit intégré selon une des revendications précédentes **caractérisé en ce qu'**il consiste :
soit à déclencher le séquencement d'une ou plusieurs instructions ou opérations à l'aide d'un signal d'horloge impulsionnel (CLK2), d'impulsions variables et aléatoires de largeur minimale Tm et de périodicité variable et aléatoire, désynchronisé par rapport à l'horloge externe (CLKE);
soit à déclencher de façon aléatoire des séquences d'interruption (40);
soit à déclencher le traitement d'une séquence aléatoire d'instructions (6) ou d'opérations au cours de l'exécution d'une séquence principale (5) d'instructions ou d'opérations ;
soit à combiner au moins deux des possibilités ci-dessus.

21. Circuit intégré comportant un microprocesseur commandé par au moins un programme et des moyens de décorrélation du séquencement de l'exécution des instructions de ce programme, **caractérisé en ce qu'**une partie de ce programme permet d'autoriser, de modifier ou d'inhiber le fonctionnement des moyens de décorrélation.

22. Circuit intégré selon la revendication 21, **caractérisé en ce que** les moyens de décorrélation comportent des moyens de générer un signal de cadencement, ou une succession d'impulsions d'horloge dont la répartition est aléatoire dans le temps, associé, soit à des moyens de générer aléatoirement des interruptions, soit à des moyens de déclencher l'exécution d'une séquence secondaire.

23. Circuit intégré selon la revendication 21 ou 22 comportant un microprocesseur ou des moyens d'exécuter des instructions, **caractérisé en ce qu'**il comporte des moyens de sélection de l'horloge de cadencement du microprocesseur ou des moyens d'exécution des instructions, les moyens de sélection permettant de sélectionner, soit une horloge externe CLKE au circuit intégré, soit une horloge aléatoire CLK2 ou S.

24. Circuit intégré selon la revendication 23, **caractérisé en ce que** l'horloge aléatoire est générée à partir d'un générateur aléatoire auquel est appliquée soit une horloge interne (FRC), soit une horloge externe (CLKE).

## Claims

1. Improved integrated circuit, **characterised in that** it has at least two activatable means (6, 2, 9, 18, 40) to decorrelate the execution of at least one sequence of instructions in a program (5) from the internal or external electrical signals of the integrated circuit (1), said decorrelation means being activated selectively by the integrated circuit.

2. Integrated circuit according to claim 1, **characterised in that** the electrical signals of the integrated circuit (1) are timing, synchronisation or state signals of the microprocessor or microcomputer (1).

3. Integrated circuit according to one of the previous claims, **characterised in that** one of the decorrelation means includes one or more circuits (18, 9, 8, 28, 11, 2) which generate a series of clock or timing pulses randomly distributed in time.

4. Integrated circuit according to one of claims 1 to 3, **characterised in that** one of the decorrelation means includes a random generator (2) used to desynchronise the execution of the program (5) sequence in the microprocessor or microcomputer (1).

5. Integrated circuit according to one of the previous claims, **characterised in that** one of the decorrelation means includes a clock calibration circuit (9) used to eliminate the timing pulses which are too short.

6. Integrated circuit according to one of the previous claims, **characterised in that** one of the decorrelation means includes a random interrupt generation system (40, 48).

7. Integrated circuit according to one of the previous claims, **characterised in that** one of the decorrelation means includes the execution of secondary sequences (6) whose instructions and execution times are different and which are chosen randomly.

8. Integrated circuit according to claim 7, **characterised in that** the variable time of the secondary processing depends on a value supplied by a random generator (2).

9. Integrated circuit according to claim 7 or 8, **characterised in that** the secondary processing (6) does not modify the general operating context of the main program (5) so that it is possible to return to the main program without having to recreate this context.

10. Integrated circuit according to one of claims 7 to 9, **characterised in that** the secondary processing (6) recreates the context of the main program (5) before returning control of the processor to it.

11. Integrated circuit according to one of the previous claims, **characterised in that** the main program (5) can authorise or disable (8, R2, 48) one or more decorrelation means.

12. Integrated circuit according to one of the previous claims, **characterised in that** it has means (45) to dephase the timing, synchronisation or state signals of the processor.

13. Integrated circuit according to claim 12, **characterised in that** the dephasing means generate a random dephasing of the timing, synchronisation or state signals of the processor.

14. Integrated circuit according to claim 13, **characterised in that** the random dephasing means desynchronise from the external clock the operation of the processor (1) partially or totally during the execution of a program.

15. Integrated circuit according to one of the previous claims, **characterised in that** the random generator (2) uses counters (B0 to B7) looped back or not and initialised by a random value (7).

16. Integrated circuit according to claim 15, **characterised in that** the initialisation value comes from a non volatile memory (7).

17. Integrated circuit according to claim 16, **characterised in that** the initialisation value is modified during the execution of a program.

18. Integrated circuit according to one of the previous claims, **characterised in that** the random generator uses a cryptographic type algorithm or a chopping function initialised by the initialisation value.

19. Integrating circuit according to one of the previous claims, **characterised in that** the sequencing of the actions takes into account the times required to access the various registers, the memories and the internal units, but also and above all the signal propagation times on the buses and through the various logic circuits.

20. Method for the use of an integrated circuit according to one of the previous claims, **characterised in that** it consists of:
either triggering the sequencing of one or more instructions or operations using a pulse clock signal (CLK2), variable and random pulses of minimum width Tₘ and of variable and random frequency, desynchronised from the external clock (CLKE);
or randomly triggering interrupt sequences (40);
or triggering the processing of a random sequence of instructions (6) or operations during the execution of a main sequence (5) of instructions or operations;
or combining at least two of the above possibilities.

21. Integrated circuit including a microprocessor controlled by at least one program and means to decorrelate the sequencing of the execution of the instructions in this program, **characterised in that** part of this program can be used to authorise, modify or disable the operation of the decorrelation means.

22. Integrated circuit according to claim 21, **characterised in that** the decorrelation means include means to generate a timing signal or a series of clock pulses randomly distributed in time, associated, either with means to randomly generate interrupts or means to trigger the execution of a secondary sequence.

23. Integrated circuit according to claim 21 or 22 including a microprocessor or means to execute instructions, **characterised in that** it includes means to select the timing clock of the microprocessor or of the means to execute instructions, the selection means being used to select either a clock CLKE external to the integrated circuit, or a random clock CLK2 or S.

24. Integrated circuit according to claim 23, **characterised in that** the random clock is generated from a random generator to which is applied either an internal clock (FRC), or an external clock (CLKE).

## Patentansprüche

1. Weiterentwickelter integrierter Schaltkreis, **dadurch gekennzeichnet, dass** er mindestens zwei aktivierbare Entkorreliermittel (6, 2, 9, 18, 40) des Ablaufs von mindestens einer Befehlsfolge eines Programms (5) mit den internen oder externen elektrischen Signalen des integrierten Schaltkreises (1) besitzt, wobei die besagten Entkorreliermittel auf selektive Weise vom integrierten Schaltkreis aktiviert werden.

2. Integrierter Schaltkreis nach Anspruch 1, **dadurch gekennzeichnet, dass** es sich bei den elektrischen Signalen des integrierten Schaltkreises (1) um Signale der Taktgebung, der Synchronisierung oder des Zustands des Mikroprozessors bzw. des Mikrorechners (1) handelt.

3. Integrierter Schaltkreis nach einem der vorausgehenden Ansprüche, **dadurch gekennzeichnet, dass** eines der Entkorreliermittel einen oder mehrere Schaltkreise (18, 9, 8, 28, 11, 2) umfasst, die eine Folge von Zeit- und Taktimpulsen erzeugen, die zeitlich zufällig verteilt sind.

4. Integrierter Schaltkreis nach einem der Ansprüche 1 bis 3, **dadurch gekennzeichnet, dass** eines der Entkorreliermittel einen Zufallsgeber (2) umfasst, der ein Entsynchronisieren der Ausführung der Programmfolge (5) im Mikroprozessor oder Mikrorechner (1) ermöglicht.

5. Integrierter Schaltkreis nach einem der vorausgehenden Ansprüche, **dadurch gekennzeichnet, dass** eines der Entkorreliermittel eine Taktgeberkalibrierung (9) umfasst, die den Ausschluss von zu kurzen Taktimpulsen ermöglicht.

6. Integrierter Schaltkreis nach einem der vorausgehenden Ansprüche, **dadurch gekennzeichnet, dass** eines der Entkorreliermittel ein System zur zufälligen Erzeugung von Unterbrechungen (40, 48) umfasst.

7. Integrierter Schaltkreis nach einem der vorausgehenden Ansprüche, **dadurch gekennzeichnet, dass** eines der Entkorreliermittel die Ausführung von Zweitfolgen (6) umfasst, deren Befehle und Ausführungszeiten verschieden sind und zufällig ausgewählt werden.

8. Integrierter Schaltkreis nach Anspruch 7, **dadurch gekennzeichnet, dass** der variable Zeitpunkt der Zweitbearbeitung von einem Wert abhängt, der von einem Zufallsgeber (2) geliefert wird.

9. Integrierter Schaltkreis nach einem der Ansprüche 7 bis 8, **dadurch gekennzeichnet, dass** die Zweitbearbeitung (6) nicht den allgemeinen Betriebskontext des Hauptprogramms (5) ändert, um die Rückkehr zu diesem letzteren zu ermöglichen, ohne diesen Kontext wiederherstellen zu müssen.

10. Integrierter Schaltkreis nach einem der Ansprüche 7 bis 9, **dadurch gekennzeichnet, dass** die Zweitbearbeitung (6) den Kontext des Hauptprogramms (5) wiederherstellt, bevor es ihm die Kontrolle des Prozessors wieder zurückgibt.

11. Integrierter Schaltkreis nach einem der vorausgehenden Ansprüche, **dadurch gekennzeichnet, dass** das Hauptprogramm (5) ein oder mehrere Entkorreliermittel freigeben oder sperren (8, R2, 48) kann.

12. Integrierter Schaltkreis nach einem der vorausgehenden Ansprüche, **dadurch gekennzeichnet, dass** er Mittel (45) zur Phasenverschiebung der Takt-, Synchronisier- oder Zustandssignale des Prozessors besitzt.

13. Integrierter Schaltkreis nach Anspruch 12, **dadurch gekennzeichnet, dass** die Mittel zur Phasenverschiebung eine zufällige Phasenverschiebung der Takt-, Synchronisier- oder Zustandssignale des Prozessors erzeugen.

14. Integrierter Schaltkreis nach Anspruch 13, **dadurch gekennzeichnet, dass** die Mittel der zufälligen Phasenverschiebung ausgehend vom externen Taktgeber den Betrieb des Prozessors (1) während der Ausführung eines Programms teilweise oder vollständig entsynchronisieren.

15. Integrierter Schaltkreis nach einem der vorausgehenden Ansprüche, **dadurch gekennzeichnet, dass** der Zufallsgeber (2) rückgekoppelte oder nicht rückgekoppelte und durch einen Zufallswert (7) initialisierte Zähler (B0 bis B7) anwendet.

16. Integrierter Schaltkreis nach Anspruch 15, **dadurch gekennzeichnet, dass** der Initialisierungswert aus einem nichtflüchtigen Speicher (7) stammt.

17. Integrierter Schaltkreis nach Anspruch 16, **dadurch gekennzeichnet, dass** der Initialisierungswert während der Ausführung eines Programms geändert wird.

18. Integrierter Schaltkreis nach einem der vorausgehenden Ansprüche, **dadurch gekennzeichnet, dass** der Zufallsgeber einen durch den Initialisierungswert initialisierten kryptographischen Algorithmus oder eine Zerhackfünktion verwendet.

19. Integrierter Schaltkreis nach einem der vorausgehenden Ansprüche, **dadurch gekennzeichnet, dass** die Folgeneinteilung der Aktionen die für den Zugang zu den verschiedenen Registern, Speichern und internen Organen erforderlichen Zeiten berücksichtigt, aber auch und vor allem die Laufzeiten der Signale auf den Bussen und durch die einzelnen logischen Schaltungen.

20. Anwendungsverfahren eines integrierten Schaltkreises nach einem der vorausgehenden Ansprüche, **dadurch gekennzeichnet, dass** es darin besteht:
entweder die Folgeneinteilung eines oder mehrerer Befehle oder Operationen mittels einem Impulstaktgebersignal (CLK2), variabler und zufälliger Impulse mit einer Mindestbreite Tm und einer variablen und zufälligen Periodizität auszulösen, die in Bezug auf den externen Taktgeber (CLKE) entsynchronisiert ist,
auf zufällige Weise Unterbrechungsfolgen (40) auszulösen,
die Bearbeitung einer zufälligen Folge von Befehlen (6) oder Operationen im Laufe der Ausführung einer Hauptfolge (5) von Befehlen oder Operationen auszulösen
oder mindestens zwei der vorausgehend genannten Möglichkeiten zu kombinieren.

21. Integrierter Schaltkreis mit einem Mikroprozessor, der von mindestens einem Programm und Entkorreliermitteln der Folgeneinteilung der Ausführung der Befehle dieses Programms gesteuert wird, **dadurch gekennzeichnet, dass** ein Teil dieses Programms die Freigabe, Änderung oder Sperrung der Funktion der Entkorreliermittel ermöglicht.

22. Integrierter Schaltkreis nach Anspruch 21, **dadurch gekennzeichnet, dass** die Entkorreliermittel Mittel umfassen, um ein Taktsignal oder eine Folge von Taktgeberimpulsen zu erzeugen, deren zeitliche Verteilung zufällig ist, verbunden mit Mitteln, um zufällig Unterbrechungen zu erzeugen oder mit Mitteln, um die Ausführung einer Zweitfolge auszulösen.

23. Integrierter Schaltkreis nach Anspruch 21 oder 22 mit einem Mikroprozessor oder Mitteln, Befehle auszuführen, **dadurch gekennzeichnet, dass** er Mittel zur Auswahl des Taktgebers für die Takteinteilung des Mikroprozessors oder Mittel zur Ausführung der Befehle umfasst, wobei die Auswahlmittel die Auswahl eines schaltkreisexternen Taktgebers CLKE oder eines Zufallstaktgebers CLK2 oder S ermöglichen.

24. Integrierter Schaltkreis nach Anspruch 23, **dadurch gekennzeichnet, dass** der Zufallstaktgeber ausgehend von einem Zufallsgeber erzeugt wird, an dem entweder ein interner Taktgeber (FRC) oder ein externer Taktgeber (CLKE) angewendet wird.
